(19) Europäisches Patentamt
European Patent Office
Office européen des brevets

(11) EP 4 411 039 A1

(12) **EUROPEAN PATENT APPLICATION**
published in accordance with Art. 153(4) EPC

(43) Date of publication:
**07.08.2024 Bulletin 2024/32**

(21) Application number: **22876361.1**

(22) Date of filing: **28.09.2022**

(51) International Patent Classification (IPC):
***D01F 9/24*** *(2006.01)* ***D04H 1/4242*** *(2012.01)*

(52) Cooperative Patent Classification (CPC):
**D01F 9/24; D04H 1/4242**

(86) International application number:
**PCT/JP2022/036226**

(87) International publication number:
**WO 2023/054495 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159450**

(71) Applicant: **TOYOBO MC Corporation**
**Osaka 530-0001 (JP)**

(72) Inventors:
- **OKADA Takemasa**
**Otsu-shi, Shiga 520-0292 (JP)**
- **MIZUTANI Akinori**
**Osaka-shi, Osaka 530-0001 (JP)**

(74) Representative: **Vossius & Partner**
**Patentanwälte Rechtsanwälte mbB**
**Siebertstrasse 3**
**81675 München (DE)**

# (54) FLAME-RESISTANT POLYPHENYLENE ETHER MOLDED BODY, FLAME-RESISTANT POLYPHENYLENE ETHER FIBER MOLDED BODY, CARBON MOLDED BODY, ACTIVATED CARBON MOLDED BODY, AND MANUFACTURING METHODS THEREFOR

(57) A flameproof polyphenylene ether formed body of the present invention has a minimum value (%/°C) of -0.40%/°C or more and -0.10%/°C or less in a differential thermogravimetric curve in a range of 400°C to 550°C.

EP 4 411 039 A1

## Description

### TECHNICAL FIELD

The present invention relates to a flameproof polyphenylene ether formed body, a flameproof polyphenylene ether fiber formed body, a carbon formed body, an activated carbon formed body, and methods for manufacturing thereof.

### BACKGROUND ART

A phenolic fiber is excellent in heat resistance, flame retardancy, and chemical resistance, and therefore the formed body formed by phenolic fiber is used in a wide range of fields including industrial material fields. A phenolic carbon fiber obtained by carbonizing a phenolic fiber formed by phenolic resin and a phenolic activated carbon fiber obtained by activating a phenolic fiber is used as a functional material in a specific field.
The phenolic fiber (novoloid fiber) is generally manufactured by melt-spinning a novolac-type phenolic resin, and then reacting the melt-spun novolac-type phenolic resin with aldehyde such as formaldehyde under an acidic catalyst to three-dimensionally crosslink and infusibilize the novolac-type phenolic resin.
Patent Document 1 proposes a method for manufacturing a phenolic carbon fiber in which a phenolic fiber manufactured by a method for manufacturing a phenolic fiber including a raw material mixing step of mixing a phenolic resin and a fatty acid amide and a spinning step of spinning a raw material mixture obtained in the raw material mixing step to obtain a yarn is reacted with an aldehyde such as formaldehyde under an acidic catalyst to be three-dimensionally crosslinked for infusibilizing, and carbonized, and a method for manufacturing a phenolic activated carbon fiber in which the phenolic carbon fiber manufactured by the method is activated.
Patent Document 2 proposes a method for manufacturing a carbonaceous fiber, in which a fiber obtained using polyphenylene oxide as a raw material is subjected to an infusibilization treatment in a temperature range of 150°C to 300°C, and then fired at a higher temperature in an inert gas atmosphere or in a vacuum.

### PRIOR ART DOCUMENT

### PATENT DOCUMENTS

Patent Document 1: JP-A-2012-52283
Patent Document 2: JP-A-S49-013431

### SUMMARY OF THE INVENTION

### PROBLEMS TO BE SOLVED BY THE INVENTION

The phenolic fiber is a useful substance as a precursor of a carbon fiber or an activated carbon fiber, but harmful aldehydes are used in the manufacture of the phenolic fiber. The use of aldehydes such as formaldehyde has a problem of adversely affecting the human body and the environment from the viewpoint of respiratory sensitization, skin sensitization, carcinogenicity, and acute toxicity to the aquatic environment, and the like. Therefore, development of a new precursor to replace the phenolic fiber is required.
When the phenolic fiber is used for applications such as a filter, the phenolic fiber having a large fiber diameter (increased diameter) is required in order to reduce the pressure loss. However, the phenolic fiber cured (infusibilized by three-dimensional crosslinking) using aldehydes is poor in flexibility, and extremely brittle. Therefore, when the diameter of the phenolic fiber is increased, mechanical strength required for producing or spinning a woven fabric, a nonwoven fabric, or a felt or the like is insufficient, which disadvantageously causes deteriorated processability.
In Patent Document 1, the fatty acid amide is mixed with the phenolic resin in order to improve the mechanical strength when the diameter of the phenolic fiber is increased.
However, the phenolic fiber containing the fatty acid amides has a problem that harmful decomposition gases such as HCN and NOx are generated during combustion, a carbonization treatment, or an activation treatment.
The method for manufacturing a carbonaceous fiber described in Patent Document 2 has a large dry heat shrinkage rate when a fiber obtained using polyphenylene oxide as a raw material is subjected to an infusibilization treatment, which disadvantageously causes poor processability and fusion of fibers.
An activated carbon formed body, an activated carbon fiber, and an activated carbon fiber formed body obtained by activating a polyphenylene ether formed body, a polyphenylene ether fiber, and a polyphenylene ether fiber formed

body containing the polyphenylene ether fiber have not been studied at all. In particular, in the present circumstances, the activated carbon formed body, the activated carbon fiber, and the activated carbon fiber formed body cannot satisfy adsorption performance and an activation yield which are important therefor. In particular, when the activation yield is low, there are a problem that the polyphenylene ether formed body, the polyphenylene ether fiber, and the polyphenylene ether fiber formed body containing the polyphenylene ether fiber are required in large amounts in the manufacture of the activated carbon formed body, the activated carbon fiber, and the activated carbon fiber formed body, and a problem that an excessive decomposition gas and carbon dioxide and the like are released in large amounts into the atmosphere during an activation treatment.

The present invention has been made in view of the above problems, and an object of the present invention is to provide a flameproof polyphenylene ether formed body, a carbon formed body, an activated carbon formed body, and a method for manufacturing the same, which have a high activation yield during an activation treatment and can be safely manufactured.

As a result of intensive studies, the present inventors have found a flameproof polyphenylene ether formed body capable of solving the above problems, and have completed the present invention. The present invention is as follows.

The present invention relates to a flameproof polyphenylene ether formed body having a minimum value (%/°C) of -0.40%/°C or more and -0.10%/°C or less in a differential thermogravimetric curve in a range of 400°C to 550°C.

In the flameproof polyphenylene ether formed body of the present invention, an absorbance height ratio (C/B) between an absorbance height C at a wave number of 1660 $cm^{-1}$ derived from C=O stretching vibration and an absorbance height B at a wave number of 1600 $cm^{-1}$ derived from skeleton vibration due to carbon-carbon stretching of a benzene ring is preferably 0.40 or more and 0.75 or less, as measured by infrared spectroscopy.

The flameproof polyphenylene ether formed body of the present invention preferably has a moisture percentage of 3.5% or less.

The flameproof polyphenylene ether formed body of the present invention is preferably a flameproof polyphenylene ether fiber.

In the flameproof polyphenylene ether formed body of the present invention, the flameproof polyphenylene ether fiber preferably has a fiber diameter of 10 um or more and 200 μm or less.

The present invention relates to a flameproof polyphenylene ether fiber formed body comprising the flameproof polyphenylene ether fiber.

The flameproof polyphenylene ether fiber formed body of the present invention is preferably a flameproof polyphenylene ether nonwoven fabric.

The present invention also relates to a carbon formed body obtained by carbonizing the flameproof polyphenylene ether formed body or the flameproof polyphenylene ether fiber formed body. Here, when the flameproof polyphenylene ether formed body is the flameproof polyphenylene ether fiber, the carbonized carbon formed body may be referred to as a carbon fiber. The carbon formed body obtained by carbonizing the flameproof polyphenylene ether fiber formed body may be referred to as a carbon fiber formed body.

The present invention also relates to an activated carbon formed body obtained by activating the flameproof polyphenylene ether formed body or the flameproof polyphenylene ether fiber formed body. The activated carbon formed body obtained by activating the flameproof polyphenylene ether fiber or the carbon fiber obtained by carbonizing the flameproof polyphenylene ether fiber may be referred to as an activated carbon fiber. The activated carbon formed body obtained by activating the flameproof polyphenylene ether fiber formed body or the carbon fiber formed body obtained by carbonizing the flameproof polyphenylene ether fiber formed body may be referred to as an activated carbon fiber formed body.

The present invention also relates to a method for manufacturing a flameproof polyphenylene ether formed body, the method comprising steps of: heat-treating a polyphenylene ether formed body in air at 120°C to 220°C for 1 to 30 hours to infusibilize the polyphenylene ether formed body; and heat-treating the polyphenylene ether formed body in air at 220 to 250°C for 0.1 to 20 hours to make the polyphenylene ether formed body flameproof.

The present invention also relates to a method for manufacturing a carbon formed body, the method comprising a step of carbonizing the flameproof polyphenylene ether formed body manufactured by the manufacturing method. The present invention also relates to a method for manufacturing a carbon formed body, the method comprising a step of carbonizing the flameproof polyphenylene ether formed body or the flameproof polyphenylene ether fiber formed body. Here, in the case of the flameproof polyphenylene ether fiber, a method for manufacturing a carbon fiber may include the step of carbonizing the flameproof polyphenylene ether fiber. In the case of the flameproof polyphenylene ether fiber formed body, a method for manufacturing a carbon fiber formed body may include the step of carbonizing the flameproof polyphenylene ether fiber formed body.

The present invention also relates to a method for manufacturing an activated carbon formed body, the method comprising a step of activating the flameproof polyphenylene ether formed body manufactured by the manufacturing method or the carbon formed body manufactured by the manufacturing method. The present invention also relates to

a method for manufacturing an activated carbon formed body, the method comprising a step of activating the flameproof polyphenylene ether formed body, the flameproof polyphenylene ether fiber formed body, or the carbon formed body.

Here, in the case of the flameproof polyphenylene ether fiber or the carbon fiber, a method for manufacturing an activated carbon fiber may include the step of activating the flameproof polyphenylene ether fiber or the carbon fiber. In the case of the flameproof polyphenylene ether fiber formed body or the carbon fiber formed body, a method for manufacturing an activated carbon fiber formed body may include the step of activating the flameproof polyphenylene ether fiber formed body or the carbon fiber formed body.

EFFECT OF THE INVENTION

A flameproof polyphenylene ether formed body of the present invention has a minimum value (%/°C) of -0.40%/°C or more and -0.10%/°C or less in a differential thermogravimetric curve in a range of 400°C to 550°C in thermogravimetric measurement in a nitrogen atmosphere. Since the flameproof polyphenylene ether formed body of the present invention has the above-mentioned properties, an activation yield during an activation treatment is increased. Furthermore, the flameproof polyphenylene ether formed body of the present invention has an advantage that no harmful decomposition gas is generated during combustion. The flameproof polyphenylene ether formed body of the present invention advantageously makes it unnecessary to use harmful substances such as aldehydes that adversely affect the human body and the environment in the manufacture thereof. The flameproof polyphenylene ether formed body of the present invention can be suitably used as a new precursor of a carbon formed body or an activated carbon formed body that is excellent in adsorption performance in place of a phenol resin and a phenolic fiber. Since the activated carbon formed body of the present invention has a sufficiently high activation yield during the activation treatment, the activated carbon formed body can be manufactured from a small amount of flameproof polyphenylene ether formed body, and has advantages that the discharge amount of a decomposition gas and carbon dioxide and the like is small.

BRIEF DESCRIPTION OF THE DRAWINGS

Fig. 1 is a cross-sectional view schematically showing one embodiment of a spinning device for a polyphenylene ether fiber.

MODE FOR CARRYING OUT THE INVENTION

1. Flameproof polyphenylene ether formed body

A flameproof polyphenylene ether formed body of the present invention has a minimum value (%/°C) of -0.40%/°C or more and -0.10%/°C or less in a differential thermogravimetric curve in a range of 400°C to 550°C.

The minimum value in the differential thermogravimetric curve in the range of 400°C to 550°C is large when the polyphenylene ether formed body is subjected to a flameproof treatment. In the present invention, thermogravimetric measurement is performed in a nitrogen atmosphere, and a peak having the smallest numerical value in the differential thermogravimetric curve in the range of 400°C to 550°C is defined as a minimum value.

The lower limit value of the minimum value in the differential thermogravimetric curve is preferably - 0.35%/°C or more, and more preferably -0.30%/°C or more, from the viewpoint of improving a carbonization yield and an activation yield. When the lower limit value of the minimum value in the differential thermogravimetric curve is less than -0.40%/°C, a tar-like decomposed gas is easily generated when the flameproof polyphenylene ether formed body is activated. The decomposition gas inhibits the activation, and thus the activation yield decreases.

The upper limit value of the minimum value in the differential thermogravimetric curve is preferably - 0.12%/°C or less, and more preferably -0.13%/°C or less, from the viewpoint of improving the mechanical strength, the carbonization yield, and the activation yield of the formed body or the fiber. When the upper limit value of the minimum value in the differential thermogravimetric curve is more than -0.10%/°C, the crosslinking of the flameproof polyphenylene ether formed body further proceeds, and activation inside pores hardly proceeds when the flameproof polyphenylene ether formed body is activated, so that the activation yield decreases.

In the flameproof polyphenylene ether formed body of the present invention, an absorbance height ratio (C/B) between an absorbance height C at a wave number of 1660 $cm^{-1}$ derived from C=O stretching vibration and an absorbance height B at a wave number of 1600 $cm^{-1}$ derived from skeleton vibration due to carbon-carbon stretching of a benzene ring is 0.40 or more and 0.75 or less, as measured by infrared spectroscopy.

A peak at the wave number of 1660 $cm^{-1}$ derived from the C=O stretching vibration is formed by subjecting a polyphenylene ether formed body to a flameproof treatment. In the present invention, the peak derived from the C=O stretching vibration is a peak in a wavelength range of 1660110 $cm^{-1}$ in consideration of a measurement error due to infrared spectroscopy.

The lower limit value of the absorbance height ratio (C/B) is preferably 0.45 or more, and more preferably 0.50 or more, from the viewpoint of improving the heat resistance, the carbonization yield, and the activation yield. The upper limit value of the absorbance height ratio (C/B) is preferably 0.73 or less, and more preferably 0.70 or less, from the viewpoint of improving the mechanical strength of the formed body or the fiber, the carbonization yield, and the activation yield.

The flameproof polyphenylene ether formed body of the present invention preferably has a moisture percentage of 3.5% or less, and more preferably 3.0% or less, from the viewpoint of reducing excessive heating energy during carbonization and activation. The lower limit value of the moisture percentage is not particularly limited, but is preferably 0% or more.

2. Flameproof polyphenylene ether fiber

Typical examples of the flameproof polyphenylene ether formed body include a flameproof polyphenylene ether fiber and a flameproof polyphenylene ether film. The flameproof polyphenylene ether fiber may be a long fiber or a short fiber. Hereinafter, as an example of the flameproof polyphenylene ether formed body of the present invention, the flameproof polyphenylene ether fiber will be described.

When the flameproof polyphenylene ether formed body of the present invention is the flameproof polyphenylene ether fiber, the fiber diameter thereof is preferably 200 μm or less, more preferably 140 um or less, still more preferably 100 μm or less, and yet still more preferably 80 μm or less. When the fiber diameter is within the above range, the flameproof polyphenylene ether formed body can be processed into various shapes such as a woven fabric, a knitted fabric, and a nonwoven fabric. The lower limit value of the fiber diameter is not particularly limited, but is preferably 10 μm or more, more preferably 15 μm or more, and still more preferably 25 μm or more, from the viewpoint of increasing the diameter.

The tensile strength of the flameproof polyphenylene ether fiber of the present invention is not particularly limited, but is preferably 0.3 cN/dtex or more, and more preferably 0.6 cN/dtex or more, and preferably 50 cN/dtex or less, and more preferably 30 cN/dtex or less, from the viewpoint of improving mechanical strength and processability.

The elongation at break of the flameproof polyphenylene ether fiber of the present invention is not particularly limited, but is preferably 5% or more, and more preferably 10% or more, and preferably 160% or less, and more preferably 130% or less, from the viewpoint of improving mechanical strength and processability.

3. Flameproof polyphenylene ether fiber formed body

An flameproof polyphenylene ether fiber formed body of the present invention contains the flameproof polyphenylene ether fiber. Examples of the flameproof polyphenylene ether fiber formed body include an flameproof polyphenylene ether woven fabric, an flameproof polyphenylene ether knitted fabric, and an flameproof polyphenylene ether nonwoven fabric. The flameproof polyphenylene ether nonwoven fabric may be a long fiber nonwoven fabric or a short fiber nonwoven fabric.

The basis weight of the flameproof polyphenylene ether fiber formed body (for example, a nonwoven fabric or the like) is not particularly limited, and can be appropriately determined depending on its application, but is preferably 20 $g/m^2$ or more, more preferably 50 $g/m^2$ or more, and still more preferably 100 $g/m^2$ or more, and preferably 1200 $g/m^2$ or less, more preferably 900 $g/m^2$ or less, and still more preferably 600 $g/m^2$ or less, from the viewpoints of processability, and the adsorption properties and physical properties of a carbon fiber formed body or an activated carbon fiber formed body to be manufactured.

The thickness of the flameproof polyphenylene ether fiber formed body (for example, a nonwoven fabric or the like) is not particularly limited, and can be appropriately determined depending on its application, but is preferably 0.1 to 12.0 mm and more preferably 0.2 to 6.0 mm, from the viewpoints of processability, and the adsorption properties and physical properties of a carbon fiber formed body or an activated carbon fiber formed body to be manufactured.

The dry heat shrinkage rate of the flameproof polyphenylene ether fiber formed body (for example, a nonwoven fabric or the like) at 900°C is not particularly limited, but is preferably 60% or less, more preferably 50% or less, from the viewpoint of shape stability. The lower limit of the dry heat shrinkage rate is not particularly limited, but is usually 0% or more, and may be 5% or more, 10% or more, or 20% or more.

The flameproof polyphenylene ether formed body or the flameproof polyphenylene ether fiber formed body of the present invention is obtained by subjecting a polyphenylene ether formed body or a polyphenylene ether fiber formed body (for example, a woven fabric, a knitted fabric, and a nonwoven fabric and the like) to a flameproof treatment. The polyphenylene ether fiber formed body contains the polyphenylene ether fiber. Hereinafter, the polyphenylene ether formed body subjected to the flameproof treatment will be described.

4. Polyphenylene ether formed body

<Polyphenylene ether component>

A polyphenylene ether formed body used in the present invention contain a polyphenylene ether component.

The polyphenylene ether component is not particularly limited, and examples thereof include those commonly used in the art. Specific examples thereof include a homopolymer having a repeating unit represented by the following general formula (1) or a copolymer containing two or more different repeating units of the general formula (1), and a copolymer having a repeating unit of the general formula (1) and a repeating unit other than the general formula (1).

[Formula 1]

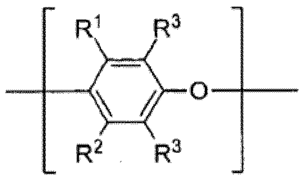

(1)

Examples of $R^1$ and $R^2$ in the general formula (1) include a hydrogen atom, alkyl groups having 1 to 10 carbon atoms such as a methyl group, an ethyl group, a propyl group, an isopropyl group, an n-butyl group, an isobutyl group, a t-butyl group, a pentyl group, a cyclopentyl group, a hexyl group, a cyclohexyl group, an octyl group, and a decyl group, aryl groups having 6 to 10 carbon atoms such as a phenyl group, a 4-methylphenyl group, a 1-naphthyl group, and a 2-naphthyl group, and aralkyl groups having 7 to 10 carbon atoms such as a benzyl group, a 2-phenylethyl group, and a 1-phenylethyl group.

When the hydrocarbon group has a substituent, examples of the substituent include halogen atoms such as a fluorine atom, and alkoxy groups such as a methoxy group. Specific examples of the hydrocarbon group having a substituent include a trifluoromethyl group.

Among them, $R^1$ and $R^2$ are preferably a hydrogen atom or a methyl group, and more preferably a hydrogen atom.

Examples of $R^3$ in the general formula (1) include alkyl groups having 1 to 10 carbon atoms such as a methyl group, an ethyl group, a propyl group, an isopropyl group, an n-butyl group, an isobutyl group, a t-butyl group, a pentyl group, a cyclopentyl group, a hexyl group, a cyclohexyl group, an octyl group, and a decyl group, aryl groups having 6 to 10 carbon atoms such as a phenyl group, a 4-methylphenyl group, a 1-naphthyl group, and a 2-naphthyl group, and aralkyl groups having 7 to 10 carbon atoms such as a benzyl group, a 2-phenylethyl group, and a 1-phenylethyl group.

When the hydrocarbon group has a substituent, examples of the substituent include halogen atoms such as a fluorine atom, and alkoxy groups such as a methoxy group. Specific examples of the hydrocarbon group having a substituent include a trifluoromethyl group.

Among them, $R^3$ is preferably a methyl group.

Specific examples of the repeating unit of the general formula (1) include repeating units derived from 2,6-dimethyl-1,4-phenylene ether, 2,6-diethyl-1,4-phenylene ether, 2-methyl-6-ethyl-1,4-phenylene ether, and 2,6-dipropyl-1,4-phenylene ether. Among them, a repeating unit derived from 2,6-dimethyl-1,4-phenylene ether is preferable.

The polyphenylene ether may contain a repeating unit other than the repeating unit of the general formula (1) as long as the effects of the present invention are not impaired. The content of such a repeating unit other than the repeating unit of the general formula (1) is not particularly limited as long as the effects of the present invention are not impaired, but for example, the content of the repeating unit is preferably about 5 mol% or less in the copolymer, and it is more preferable that the repeating unit be not contained.

The molecular weight of the polyphenylene ether is not particularly limited, but the weight average molecular weight (Mw) is preferably 40,000 to 100,000, and more preferably 50,000 to 80,000. The number average molecular weight (Mn) of the polyphenylene ether is preferably 7,000 to 30,000, and more preferably 8,000 to 20,000. The molecular weight dispersion (Mw/Mn) of the polyphenylene ether is preferably 3.5 to 8.0, and more preferably 4.0 to 6.0.

Examples of a method for obtaining the polyphenylene ether formed body include a method including the step of melting a polyphenylene ether (for example, melt spinning or the like when the formed body is a fiber), and a method including the step of dissolving a polyphenylene ether in an organic solvent (for example, dry spinning or wet spinning or the like when the formed body is a fiber).

<Component other than polyphenylene ether component>

The polyphenylene ether formed body used in the present invention may contain a resin component other than the polyphenylene ether component. Examples of the resin component other than the polyphenylene ether component include polystyrene, polyolefins such as polyethylene and polypropylene; polyamides such as polyamide 4, polyamide 6, polyamide 10, polyamide 11, polyamide 66, polyamide 6T, and polyamide 6T/11; polyesters such as polyethylene terephthalate and polybutylene terephthalate; and polycarbonate. However, the content of the resin component is preferably 5% by mass or less, and more preferably 2% by mass or less. It is still more preferable that the resin component is not contained (0% by mass).

Additives such as a lubricant, a plasticizer, an antioxidant, an ultraviolet absorber, a texturing agent, and an antistatic agent can also be added to the polyphenylene ether formed body used in the present invention as long as the effects of the present invention are not impaired.

<Content of polyphenylene ether>

In the polyphenylene ether formed body used in the present invention, the content of the polyphenylene ether is preferably 95% by mass or more, and more preferably 98% by mass or more in all components forming the formed body. The polyphenylene ether formed body is still more preferably substantially composed only of the polyphenylene ether (100% by mass). When the content of the polyphenylene ether in the polyphenylene ether formed body is within the above range, excellent mechanical strength and processability can be obtained.

<Method for manufacturing polyphenylene ether fiber>

Hereinafter, the method for manufacturing polyphenylene ether fiber will be described as one example of a polyphenylene ether formed body.

The polyphenylene ether fiber can be manufactured by various manufacturing methods such as melt spinning, dry spinning, and wet spinning. Among them, melt spinning is preferable because high productivity and the like can be achieved.

An example of a case of producing a polyphenylene ether fiber by melt spinning will be described with reference to Fig. 1 showing a spinning device. Polyphenylene ether as a raw material is charged into an extruder 2 including a cylinder and a screw from a hopper 1 in Fig. 1. The discharge speed of the molten polyphenylene ether is measured by a gear pump 3. The molten polyphenylene ether passes through a filter material 4 composed of metal nonwoven fabric and the like, and is discharged from a spinning nozzle 5, whereby a fiber can be obtained. A filter 6 composed of a fine sands or the like is preferably set on the filter material 4. The filter 6 is set, whereby foreign substances can be removed in advance, and the clogging and the like of the filter material 4 can be prevented, which is preferable.

The hole diameter of the spinning nozzle, the single hole discharge amount of the spinning nozzle, and the spinning speed are not particularly limited, and may be appropriately set depending on the required fineness and the like.

Examples of the polyphenylene ether as the raw material include a homopolymer having a repeating unit of the general formula (1), a copolymer containing two or more different repeating units of the general formula (1), and a copolymer having a repeating unit of the general formula (1) and a repeating unit other than the repeating unit of the general formula (1). Examples of the content of the repeating unit other than the repeating unit of the general formula (1) in the copolymer include those described above. Among them, a homopolymer having a repeating unit of the general formula (1) is preferable.

Specific examples of the homopolymer having a repeating unit of the general formula (1) include poly(2,6-dimethyl-1,4-phenylene ether), poly(2,6-diethyl-1,4-phenylene ether), poly(2-methyl-6-ethyl-1,4-phenylene ether), and poly(2,6-dipropyl-1,4-phenylene ether), and among them, poly(2,6-dimethyl-1,4-phenylene ether) is preferred.

As poly(2,6-dimethyl-1,4-phenylene ether), commercially available products can also be suitably used, and specific examples thereof include PPO 640, PPO 646, and PPO SA120 manufactured by SABIC Innovative Plastics, and XYRON(TRADEMARK REGISTRATION) S201A and XYRON(TRADEMARK REGISTRATION) S202A manufactured by Asahi Kasei Chemicals Corporation.

The glass transition temperature of the polyphenylene ether component having high glass transition temperature is preferably 170°C or higher, more preferably 200°C or higher, and still more preferably 210°C or higher. The upper limit value of the glass transition temperature is not particularly limited, but is preferably 230°C or lower. The glass transition temperature of the polyphenylene ether as the raw material is within the above range, whereby a polyphenylene ether fiber and formed body having high heat resistance can be obtained.

The content of the polyphenylene ether having a glass transition temperature of 170°C or higher in the polyphenylene ether component as the raw material is preferably 70% by mass or more, more preferably 80% by mass or more, and still more preferably 90% by mass or more. The upper limit value of the content of the polyphenylene ether having

a glass transition temperature of 170°C or higher is not particularly limited, but is preferably 100% by mass or less. In the present invention, polyphenylene ether having a high glass transition temperature (that is, a high molecular weight) is contained within the above range, whereby the obtained polyphenylene ether melt extrusion formed body has excellent mechanical strength, heat resistance, chemical resistance, and flame retardancy and the like, which is preferable.

In addition to the polyphenylene ether as the raw material, a resin component other than the polyphenylene ether component, and an additive can be contained. The resin component other than the polyphenylene ether component and the additive are as described above. The content of the resin component other than the polyphenylene ether component in the raw material is preferably 5% by mass or less, and more preferably 2% by mass or less. It is still more preferable that the resin component not be contained (0% by mass).

As the extruder including the cylinder and the screw, a single screw extruder or a twin screw extruder which can be usually used in the present field can be used. In the present invention, it is preferable to use a twin screw extruder.

When a temperature in the cylinder is too low, the fluidity of the resin is poor. When the temperature is too high, the fluidity is improved, but a foaming phenomenon occurs due to the thermal decomposition of the resin. This makes it necessary to select a processing temperature which provides a balance therebetween.

<Polyphenylene ether nonwoven fabric>

A polyphenylene ether nonwoven fabric will be described as one example of a polyphenylene ether fiber formed body. The polyphenylene ether nonwoven fabric is a nonwoven fabric containing the polyphenylene ether fiber. As raw materials and the like used for forming the polyphenylene ether nonwoven fabric, the same materials as those described for the polyphenylene ether fiber can be used. A method for manufacturing the polyphenylene ether nonwoven fabric is not particularly limited, and methods commonly used in the art can be appropriately adopted. Examples of a method for manufacturing a nonwoven fabric include a spunbond method, a meltblow method, a spunlace method, a needle punch method, a thermal bond method, and a chemical bond method. Among them, a needle punch method is preferable.

5. Method for manufacturing flameproof polyphenylene ether formed body (or flameproof polyphenylene ether fiber formed body)

An flameproof polyphenylene ether formed body (or flameproof polyphenylene ether fiber formed body) of the present invention can be manufactured by subjecting the polyphenylene ether formed body (or the polyphenylene ether fiber formed body) to a heat treatment at 120 to 220°C for 1 to 30 hours in air for infusibilizing (infusibilization treatment), and further to a heat treatment at 220 to 250°C for 0.1 to 20 hours in air for flameproofing (flameproof treatment). Here, "in air" refers to an environment which is not particularly adjusted.

A treatment temperature of the infusibilization treatment is 120 to 220°C, preferably 140 to 220°C, and more preferably 150 to 210°C. A treatment time is 1 to 30 hours, preferably 5 to 28 hours, and more preferably 10 to 25 hours. By setting the treatment temperature and the treatment time, an infusibilizing structure is formed in the polyphenylene ether formed body (or the polyphenylene ether fiber formed body).

A treatment temperature of the flameproof treatment is 220 to 250°C, preferably 225 to 245°C. A treatment time is 0.1 to 20 hours, preferably 0.2 to 10 hours. A rate of temperature increase until the treatment temperature is reached is preferably 0.01 to 2°C/min, and more preferably 0.1 to 1°C/min. By setting the treatment temperature, the treatment time, and the rate of temperature increase, a flameproof structure is formed in the polyphenylene ether formed body (or the polyphenylene ether fiber formed body).

6. Method for manufacturing carbon formed body

A carbon formed body of the present invention can be manufactured by carbonizing the flameproof polyphenylene ether formed body or the flameproof polyphenylene ether fiber formed body.

The carbonization can be performed by known method. Specifically, the carbonization can be performed by heating in the presence of an inert gas. Examples of the inert gas include nitrogen and argon. A heating temperature is usually 400 to 2500°C, and preferably 800 to 1500°C. A heating time is usually 0.2 to 10 hours, and preferably 0.5 to 5 hours.

7. Method for manufacturing activated carbon formed body

An activated carbon formed body of the present invention can be manufactured by activating the flameproof polyphenylene ether formed body, the flameproof polyphenylene ether fiber formed body or the carbon formed body.

The activation can be performed by known method, and specific examples thereof include a gas activation method and a chemical activation method. From the viewpoint of improving mechanical strength and purity, a gas

activation method is preferable.

In the gas activation method, an activation gas is brought into contact with the flameproof polyphenylene ether formed body or the carbon formed body to activate the formed bodies. Examples of the activation gas include water vapor, air, carbon monoxide, carbon dioxide, hydrogen chloride, oxygen, and a mixed gas thereof. A temperature at the time of gas activation is usually 600 to 1200°C, and preferably 800 to 1000°C. A time for gas activation is usually 0.2 to 10 hours, and preferably 0.5 to 3 hours.

In the chemical activation method, alkali metal hydroxides such as sodium hydroxide and potassium hydroxide; alkaline earth metal hydroxides such as calcium hydroxide; inorganic acids such as boric acid, phosphoric acid, sulfuric acid, and hydrochloric acid; and inorganic salts such as zinc chloride are brought into contact with the flameproof polyphenylene ether formed body or the carbon formed body to activate the formed bodies. A temperature at the time of chemical activation is usually 400 to 1000°C, and preferably 500 to 800°C. A time for chemical activation is usually 0.2 to 5 hours, and preferably 0.5 to 5 hours.

The BET specific surface area of the activated carbon formed body of the present invention is preferably 500 $m^2$/g or more, more preferably 650 $m^2$/g or more, still more preferably 800 $m^2$/g or more, yet still more preferably 1000 $m^2$/g or more, further more preferably 1200 $m^2$/g or more, and still further more preferably 1400 $m^2$/g or more. The upper limit of the BET specific surface area is usually 3000 $m^2$/g or less, and may be 2500 $m^2$/g or less.

When the activated carbon formed body of the present invention is an activated carbon fiber, the fiber diameter thereof can be made larger than that of a conventional activated carbon fiber, and is preferably 11 um or more, more preferably 17 μm or more, still more preferably 22 um or more, and yet still more preferably 30 μm or more. The upper limit of the fiber diameter is usually 150 um or less, and may be 100 um or less, or 70 μm or less.

When the activated carbon formed body of the present invention is an activated carbon fiber nonwoven fabric, the basis weight can be appropriately adjusted depending on the application, but is preferably 15 g/$m^2$ or more, more preferably 40 g/$m^2$ or more, still more preferably 100 g/$m^2$ or more, further more preferably 150 g/$m^2$ or more, preferably 1000 g/$m^2$ or less, more preferably 700 g/$m^2$ or less, still more preferably 500 g/$m^2$ or less.

From the viewpoint of mechanical strength, the tensile strength (machine and transverse) of the activated carbon fiber nonwoven fabric of the present invention is preferably 0.5 N/cm or more, more preferably 1.0 N/cm or more, and still more preferably 1.5 N/cm or more, and the upper limit of the tensile strength is usually 10 N/cm or less, and may be 5 N/cm or less, or 3 N/cm or less.

From the viewpoint of mechanical strength, the elongation at break (machine and transverse) of the activated carbon fiber nonwoven fabric of the present invention is preferably 2% or more, and more preferably 4% or more. The upper limit of the elongation at break is usually 15% or less, and may be 10% or less.

The pressure loss coefficient of the activated carbon fiber nonwoven fabric of the present invention is preferably 0.60 mmAq·s/$cm^2$ or less, more preferably 0.40 mmAq·s/$cm^2$ or less, and still more preferably 0.30 mmAq·s/$cm^2$ or less, and the lower limit value of the pressure loss coefficient is usually 0.10 mmAq·s/$cm^2$ or more.

The carbon formed body, the carbon fiber, the carbon fiber formed body, the activated carbon formed body, the activated carbon fiber and the activated carbon fiber formed body of the present invention are suitably used for, for example, recovering an organic solvent such as dichloromethane; removing a chlorine compound such as trihalomethane; removing harmful gases such as malodorous gases, NOx, and SOx; and removing heavy metals such as lead, arsenic, and manganese.

## EXAMPLES

Hereinafter, the present invention will be more specifically described with reference to Examples and Comparative Examples, but the present invention is not limited to the following Examples. The evaluation methods of physical properties and the like are as follows.

(1) Minimum value in differential thermogravimetric curve

Using a thermal analyzer (product name: STA7000, manufactured by Hitachi High-Tech Co., Ltd.), 10 mg of a sample was filled in a platinum pan, the temperature was raised from 35°C to 1050°C at 10°C/min in a nitrogen atmosphere, and thermogravimetric measurement was performed to obtain a thermogravimetric change curve (TG curve) with an x-axis representing a temperature (°C) and a y-axis representing a thermogravimetric change rate (%). Furthermore, a differential thermogravimetric curve (DTG curve, unit: %/°C) obtained by differentiating the TG curve was obtained. The differential thermogravimetric curve represents a positive value as the thermal weight of the sample increases and a negative value as the thermal weight of the sample decreases. The peak of the smallest numerical value in the differential thermogravimetric curve in a range of 400°C to 550°C was determined as the minimum value (%/°C) in the differential thermogravimetric curve.

(2) Fiber diameter

The fiber diameters of a polyphenylene ether fiber, a flameproof polyphenylene ether fiber, and a novoloid fiber were determined by observing a microscopic image using a scanning electron microscope (product name: SU1510, manufactured by Hitachi High-Technologies Corporation), reading the fiber diameters of 100 portions from the microscopic image, and averaging the read fiber diameters.
The fiber diameters of the carbon fiber and the activated carbon fiber were measured by the method described in JIS K-1477 7.3.1. The fiber diameter means a diameter of a fiber.

(3) Absorbance height ratio (C/B)

Thinly stretched nonwoven fabrics obtained in Examples 1 and 2 and Comparative Examples 1 to 6 were used as measurement samples.
Using an infrared spectrophotometer (FTIR) (product name: 3100FT-IR/600UMA, manufactured by Varian, Inc.), the absorbances of the obtained samples were measured by a microscopic transmission method under the following conditions.

(Measurement conditions)

Field of view: 80 μm × 80 um
Measurement wavelength range: 400 $cm^{-1}$ to 4000 $cm^{-1}$
Number of accumulation: 128
Resolution: 4 $cm^{-1}$

A reference line connecting a minimum value at a wavelength of 1550 to 1480 $cm^{-1}$ and a minimum value at 1900 to 1800 $cm^{-1}$ of the obtained spectrum was drawn, and evaluation was performed by using a peak height (peak absorbance height) from the reference line. A peak height at 1610 to 1590 $cm^{-1}$ was defined as an absorbance height B, a peak height at 1670 to 1650 $cm^{-1}$ was defined as an absorbance height C, and the absorbance height ratio was defined by values of C/B.

(4) Moisture percentage

The moisture percentage was measured by a method described in JIS L-1015 8.1.1. A sample used was left to stand for 3 hours in an atmosphere of a temperature of 20°C and a relative humidity of 65%.

(5) Weight reduction rate

Using a thermal analyzer STA7000, 10 mg of a sample was filled in a platinum pan. The temperature was raised from 35°C to 1050°C at 10°C/min in a nitrogen atmosphere, and a weight D (mg) at 150°C and a weight E (mg) at 900°C were measured. A weight reduction rate (%) when the temperature was raised from 150°C to 900°C was calculated from the following formula. The smaller the value of this reduction ratio, the better the heat resistance.

$$\text{Weight reduction rate (\%)} = \{(D - E)/D\} \times 100$$

(6) Combustion test

Measurement was performed by the method described in BSS 7239 (Boeing Company standards). Concentrations of hydrogen cyanide (HCN) and nitrogen oxide ($NO+NO_2$) were measured with a Drager detector tube.

(7) BET specific surface area

30 mg of a sample was collected, dried under vacuum at 130°C for 12 hours, weighed, and measured using an automatic specific surface area measuring device GEMINI VII2390 (manufactured by Micromeritics). The adsorption amount of nitrogen gas at the boiling point (-195.8°C) of liquid nitrogen was measured at a relative pressure in the range of 0.02 to 0.95 to prepare an adsorption isotherm of the sample. Based on the results when the relative pressure was

in the range of 0.02 to 0.15, a BET specific surface area ($m^2/g$) per weight was determined by the BET method.

(8) Pressure loss coefficient

The nonwoven fabric obtained in each of Examples 1 and 2 and Comparative Examples 1 to 6 was cut into a circle having a diameter of 27 mm, and filled into a cylindrical tube having an inner diameter of 27 mm while applying a load such that the nonwoven fabric had a thickness of 30 mm and a packing density of 100 $kg/m^3$. Air having a temperature of 25°C and a relative humidity of 50% RH was supplied to the cylindrical tube at a linear velocity of 30 cm/sec, and the static pressure difference (mmAq) between the primary side and the secondary side of the filled nonwoven fabric was measured. The pressure loss coefficient ($mmAq{\cdot}s/cm^2$) of the nonwoven fabric was obtained from the obtained static pressure difference by the following formula.

Pressure loss coefficient = pressure loss/linear velocity/thickness

(9) Basis weight

The mass per unit area of the nonwoven fabric sample was measured and determined in a unit of $g/m^2$. The mass was measured in an absolute dry state after a treatment at 100°C for 2 hours in an air atmosphere.

(10) Fusion

For a flameproof polyphenylene ether fiber nonwoven fabric (in only Comparative Example 5, a non-flameproof polyphenylene ether fiber nonwoven fabric) or a novoloid fiber nonwoven fabric, whether or not the fibers of the sample were fused to each other was visually confirmed, and the fiber nonwoven fabrics in which the fibers were not detached from each other when pulled by hands were determined to be fused.

(11) Flexibility

For a flameproof polyphenylene ether fiber nonwoven fabric (in only Comparative Example 5, a non-flameproof polyphenylene ether fiber nonwoven fabric) or a novoloid fiber nonwoven fabric, samples having a size of 25 mm in width × 50 mm in length were prepared, a load was applied to the end of each of the samples until the sample was bent by 90° in the length direction of the sample, and the sample that was not broken before reaching 90° was determined to have flexibility.

(12) Toluene adsorption ratio

The toluene adsorption ratio of a sample of an activated carbon fiber nonwoven fabric was measured in accordance with JIS K 1477 "7.8 Toluene adsorption performance".

(13) Activation yield

The weight F of the polyphenylene ether fiber nonwoven fabric or the novoloid fiber nonwoven fabric before the infusibilizing treatment was measured in an absolute dry state where it was treated at 100°C for 2 hours in an air atmosphere, and the weight G of the activated carbon fiber obtained by subjecting the flameproof polyphenylene ether fiber nonwoven fabric (in only Comparative Example 5, the non-flameproof polyphenylene ether fiber nonwoven fabric) or the novoloid fiber nonwoven fabric to the activation treatment was measured in an absolute dry state where it was treated at 100°C for 2 hours in an air atmosphere, and the activation yield was calculated from the following formula.

$$\text{Activation yield (\%)} = \{G/F\} \times 100$$

Example 1

Poly(2,6-dimethyl-1,4-phenylene ether) (PPO 640, glass transition temperature (Tg): 221°C, manufactured by SABIC Innovative Plastic) was extruded at 300°C using a twin screw extruder (product name: KZW15TW-30MG) manufactured by Technovel corporation. A gear pump was installed downstream of the extruder to measure the discharge

speed of the polymer, and the polymer was extruded to a nozzle maintained at 320°C. The polymer discharged from the nozzle was wound up to obtain a polyphenylene ether fiber. The obtained polyphenylene ether fiber was subjected to fiber crimping processing, cut to a length of 76 mm, and then subjected to a front and back treatment under conditions of a needle density of 100 needles/$cm^2$, and needle depths of 12 mm (front) and 7 mm (back) by a needle punch machine, thereby obtaining a polyphenylene ether nonwoven fabric. The obtained polyphenylene ether nonwoven fabric was heated from normal temperature to 180°C in air at a rate of temperature increase of 10°C/min, and subjected to a heat treatment for 24 hours while the temperature of 180°C was maintained. Subsequently, the temperature was raised from 180°C to 240°C in air at a rate of temperature increase of 0.2°C/min, and a heat treatment was performed for 5 hours while the temperature of 240°C was maintained to obtain a flameproof polyphenylene ether nonwoven fabric. The evaluation results of the obtained flameproof polyphenylene ether nonwoven fabric are shown in Table 1. Furthermore, the obtained flameproof polyphenylene ether nonwoven fabric was subjected to an activation treatment at 900°C for 1 hour in the presence of 11 vol.% of water vapor in nitrogen, to obtain an activated carbon fiber nonwoven fabric. The evaluation results of the obtained activated carbon fiber nonwoven fabric are shown in Table 1.

Example 2

A flameproof polyphenylene ether nonwoven fabric was obtained in the same manner as in Example 1 except that the condition of the flameproof treatment was changed to a condition in which the temperature was raised from room temperature to 180°C in air at a rate of temperature increase of 10°C/min, a heat treatment was performed for 24 hours while the temperature of 180°C was maintained, the temperature was further continuously raised from 180°C to 240°C in air at a rate of temperature increase of 0.2°C/min, and a heat treatment was performed for 5 hours while the temperature of 230°C was maintained. The evaluation results are shown in Table 1.

Comparative Example 1

A flameproof polyphenylene ether nonwoven fabric was obtained in the same manner as in Example 1 except that the condition of the flameproof treatment was changed to a condition in which the temperature was raised from room temperature to 200°C in air at a rate of temperature increase of 10°C/min, and a heat treatment was performed for 5 hours while the temperature of 200°C was maintained. An activated carbon fiber nonwoven fabric obtained by activating the obtained flameproof polyphenylene ether had an extremely low activation yield although having a BET specific surface area almost equivalent to that of Example 1. The evaluation results are shown in Table 1.

Comparative Example 2

A flameproof polyphenylene ether nonwoven fabric was obtained in the same manner as in Example 1 except that the condition of the flameproof treatment was changed to a condition in which the temperature was raised from room temperature to 180°C in air at a rate of temperature increase of 10°C/min, a heat treatment was performed for 5 hours while the temperature of 180°C was maintained, the temperature was further continuously raised from 180°C to 280°C in air at a rate of temperature increase of 0.2°C/min, and a heat treatment was performed for 5 hours while the temperature of 280°C was maintained. However, an activated carbon fiber nonwoven fabric obtained by activating the obtained flameproof polyphenylene ether had an extremely low activation yield although having a BET specific surface area almost equivalent to that of Example 1. The evaluation results are shown in Table 1.

Comparative Example 3

A flameproof polyphenylene ether nonwoven fabric was obtained in the same manner as in Example 1 except that the condition of the flameproof treatment was changed to a condition in which the temperature was raised from room temperature to 200°C in air at a rate of temperature increase of 10°C/min, and a heat treatment was performed for 24 hours while the temperature of 200°C was maintained. An activated carbon fiber nonwoven fabric obtained by activating the obtained flameproof polyphenylene ether had an extremely low activation yield although having a BET specific surface area almost equivalent to that of Example 1. The evaluation results are shown in Table 1.

Comparative Example 4

A flameproof polyphenylene ether nonwoven fabric was obtained in the same manner as in Example 1 except that the condition of the flameproof treatment was changed to a condition in which the temperature was raised from room temperature to 180°C in air at a rate of temperature increase of 10°C/min, and further continuously raised from 180°C to 250°C in air at a rate of temperature increase of 0.2°C/min, and a heat treatment was performed for 2 hours

while the temperature of 250°C was maintained. However, the obtained flameproof polyphenylene ether nonwoven fabric had a width shrinkage ratio of 70% or more before and after the flameproof treatment, was extremely poor in flexibility, and did not maintain the shape of the nonwoven fabric. The evaluation results are shown in Table 1.

Comparative Example 5

The polyphenylene ether nonwoven fabric obtained in Example 1 was subjected to each evaluation without being subjected to a flameproof treatment, and the results thereof are shown in Table 1. Furthermore, when the obtained polyphenylene ether nonwoven fabric was subjected to an activation treatment at 900°C for 1 hour in the presence of 11 vol.% water vapor in nitrogen, the shape of the nonwoven fabric was not maintained because the fibers were melted, and an activated carbon fiber nonwoven fabric was not obtained. The evaluation results are shown in Table 1.

Comparative Example 6

Novoloid fibers having a fiber length of 70 mm and no fiber crimp (Kynol, manufactured by Gun-Ei Chemical Industry Co., Ltd.) were subjected to a front and back treatment with a needle punch machine under conditions of a needle density of 100 needles/$cm^2$, and needle depths of 12 mm (front) and 7 mm (back) to obtain a novoloid fiber nonwoven fabric. The novoloid fiber used was infusibilized with formaldehyde in its manufacture, and contained 5% by mass of behenic acid amide. The evaluation results of the obtained novoloid fiber nonwoven fabric are shown in Table 1. Furthermore, the obtained nonwoven fabric was subjected to an activation treatment at 900°C for 1 hour in the presence of 11 vol.% of water vapor in nitrogen, to obtain an activated carbon fiber nonwoven fabric. The evaluation results are shown in Table 1.

[Table 1]

| | | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|---|
| Constituent fiber | | Flameproof polyphenylene ether fiber | Flameproof polyphenylene ether fiber | Flameproof polyphenylene ether fiber | Flameproof polyphenylene ether fiber | Flameproof polyphenylene ether fiber | Flameproof polyphenylene ether fiber | Non-flameproof polyphenylene ether fiber | Novoloid fiber |
| Flameproof treatment condition (in air atmosphere) | | 180°C × 24 h → 240°C × 5 h | 180°C × 24 h - 230°C × 5 h | 200°C × 5 h | 180°C × 24 h → 280°C × 5 h | 200°C × 24 h | 250°C × 2 h | - | - |
| Rate of temperature increase in (°C/min) flameproofing | | Normal temperature to 180°C: 10 180 to 240°C: 0.2 | Normal temperature to 180°C: 10 180 to 230°C: 0.2 | Normal temperature to 200°C: 10 | Normal temperature to 180°C: 10 180 to 280°C: 0.2 | Normal temperature to 200°C: 10 | Normal temperature to 180°C: 10 180 to 250°C: 0.2 | - | - |
| Use of harmful substances in infusibilization or flameproofing | | Absence | Absence | Absence | Absence | Absence | Absence | Absence | Presence |
| Structure | Fiber diameter (pin) | 46 | 46 | 46 | 46 | 46 | 46 | 46 | 35 |
| | Basis weight ($g/m^2$) | 590 | 580 | 580 | 576 | 570 | 579 | 569 | 560 |
| | Minimum value in differential (%/°C) thermogravimetric curve | -0.15 | -0.27 | -1.30 | -0.09 | -0.53 | -0.48 | -2.30 | -0.25 |
| | Absorbance height ratio C/B (1661 $cm^{-1}$/1600 $cm^{-1}$) | 0.70 | 0.52 | 0.13 | 0.60 | 0.46 | 0.78 | 0.00 | - |
| | Moisture percentage (%) | 3.2 | 2.2 | 0.4 | 5.2 | 0.9 | 2.5 | 0.0 | 4.2 |

(continued)

| | | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|---|
| Properties | Fusion of fibers | Absence | Absence | Absence | Absence | Absence | Presence | Absence | Absence |
| | Flexibility of nonwoven fabric | Presence | Presence | Presence | Presence | Presence | Absence | Presence | Presence |
| | Difference in weight reduction rate between 150°C (%) and 900°C (in nitrogen atmosphere) | 46.5 | 50.1 | 66.8 | 46.7 | 49.1 | 45.5 | 68.1 | 50.4 |
| | Decomposition gas HCN (ppm) | Absence | Absence | Absence | Absence | Absence | Absence | Absence | 4 |
| | concentration during combustion NOx (ppm) | Absence | Absence | Absence | Absence | Absence | Absence | Absence | 3 |
| Structure and properties of activated carbon fiber nonwoven fabric | BET specific surface area ($m^2/g$) | 1490 | 1470 | 1421 | 1485 | 1430 | - | - | 1480 |
| | Fiber diameter ($\mu m$) | 32 | 32 | 31 | 31 | 32 | - | - | 24 |
| | Basis weight ($g/m^2$) | 320 | 306 | 351 | 309 | 338 | - | - | 310 |
| | Toluene adsorption ratio (%) | 46 | 46 | 44 | 46 | 44 | | | 45 |
| | Activation yield (%) | 35.4 | 34.0 | 22.1 | 26.5 | 25.0 | - | - | 32.0 |
| | Pressure loss coefficient ($mmAg \cdot s/cm^2$) | 0.31 | 0.29 | 0.36 | 0.30 | 0.33 | - | - | 0.60 |

As can be seen from Table 1, the flameproof polyphenylene ether fiber of each of Examples 1 and 2 has an extremely high activation yield as compared with the flameproof polyphenylene ether fiber of each of Comparative Examples 1 and 3, so that an activated carbon fiber can be manufactured from a small amount of the polyphenylene ether fiber, and the release of a decomposition gas and carbon dioxide and the like generated by the activation treatment to the atmosphere can be suppressed. Compared to the novoloid fiber of Comparative Example 6, the flameproof polyphenylene ether fiber of each of Examples 1 and 2 does not contain harmful chemicals such as aldehydes in its manufacture. The flameproof polyphenylene ether fiber of each of Examples 1 and 2 did not generate harmful decomposition gases (HCN and NOx) during combustion. The activated carbon fiber nonwoven fabric obtained by activating the flameproof polyphenylene ether nonwoven fabric of each of Examples 1 and 2 has a larger fiber diameter and a smaller pressure loss coefficient than those of the activated carbon fiber nonwoven fabric obtained by activating the novoloid nonwoven fabric of Comparative Example 6, and thus can be suitably used for applications such as a filter. It is also found that the flameproof polyphenylene ether fiber of each of Examples 1 and 2 has a small difference in weight reduction rate between 150°C and 900°C, and thus is excellent in heat resistance.

INDUSTRIAL APPLICABILITY

The flameproof polyphenylene ether fiber of the present invention is suitably used, for example, as a precursor of a carbon fiber or an activated carbon fiber that is excellent in adsorption performance and physical properties instead of a phenolic fiber.

DESCRIPTION OF REFERENCE SIGNS

1 Hopper
2 Extruder
3 Gear pump
4 Filter material
5 Spinning nozzle
6 Filter
7 Heat-retaining space
8 Introducing of an inert gas
9 Heating torch

**Claims**

1. A flameproof polyphenylene ether formed body having a minimum value (%/°C) of -0.40%/°C or more and -0.10%/°C or less in a differential thermogravimetric curve in a range of 400°C to 550°C.

2. The flameproof polyphenylene ether formed body according to claim 1, wherein an absorbance height ratio (C/B) between an absorbance height C at a wave number of 1660 $cm^{-1}$ derived from C=O stretching vibration and an absorbance height B at a wave number of 1600 $cm^{-1}$ derived from skeleton vibration due to carbon-carbon stretching of a benzene ring is 0.40 or more and 0.75 or less, as measured by infrared spectroscopy.

3. The flameproof polyphenylene ether formed body according to claim 1 or 2, having a moisture percentage of 3.5% or less.

4. The flameproof polyphenylene ether formed body according to claim 1, wherein the flameproof polyphenylene ether formed body is a flameproof polyphenylene ether fiber.

5. The flameproof polyphenylene ether formed body according to claim 4, having a fiber diameter of 10 μm or more and 200 μm or less.

6. A flameproof polyphenylene ether fiber formed body comprising the flameproof polyphenylene ether formed body according to claim 4.

7. The flameproof polyphenylene ether fiber formed body according to claim 6, wherein the flameproof polyphenylene

ether fiber formed body is a flameproof polyphenylene ether nonwoven fabric.

**8.** A carbon formed body obtained by carbonizing the flameproof polyphenylene ether formed body according to claim 1 or 2 or the flameproof polyphenylene ether fiber formed body according to claim 6 or 7.

**9.** An activated carbon formed body obtained by activating the flameproof polyphenylene ether formed body according to claim 1 or 2 or the flameproof polyphenylene ether fiber formed body according to claim 6 or 7.

**10.** An activated carbon formed body obtained by activating the carbon formed body according to claim 8.

**11.** A method for manufacturing a flameproof polyphenylene ether formed body, the method comprising steps of: heat-treating a polyphenylene ether formed body in air at 120°C to 220°C for 1 to 30 hours to infusibilize the polyphenylene ether formed body; and heat-treating the polyphenylene ether formed body in air at 220 to 250°C for 0.1 to 20 hours to make the polyphenylene ether formed body flameproof.

**12.** A method for manufacturing a carbon formed body, the method comprising a step of carbonizing the flameproof polyphenylene ether formed body manufactured by the manufacturing method according to claim 11.

**13.** A method for manufacturing an activated carbon formed body, the method comprising a step of activating the flameproof polyphenylene ether formed body manufactured by the manufacturing method according to claim 11 or the carbon formed body manufactured by the manufacturing method according to claim 12.

**14.** A method for manufacturing a carbon formed body, the method comprising a step of carbonizing the flameproof polyphenylene ether formed body according to claim 1 or 2 or the flameproof polyphenylene ether fiber formed body according to claim 6 or 7.

**15.** A method for manufacturing an activated carbon formed body, the method comprising a step of activating the flameproof polyphenylene ether formed body according to claim 1 or 2 or the flameproof polyphenylene ether fiber formed body according to claim 6 or 7.

**16.** A method for manufacturing an activated carbon formed body, the method comprising a step of activating the carbon formed body according to claim 8.

Fig.1

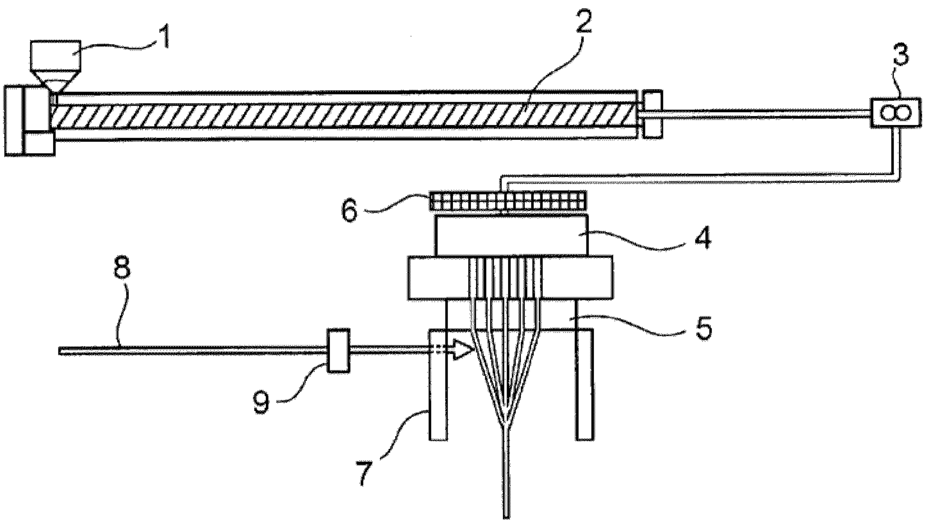

## INTERNATIONAL SEARCH REPORT

International application No.
**PCT/JP2022/036226**

**A. CLASSIFICATION OF SUBJECT MATTER**

***D01F 9/24***(2006.01)i; ***D04H 1/4242***(2012.01)i
FI: D01F9/24; D04H1/4242

According to International Patent Classification (IPC) or to both national classification and IPC

**B. FIELDS SEARCHED**

Minimum documentation searched (classification system followed by classification symbols)

D01F9/08-9/32; D04H1/00-18/04; C01B32/00-32/39

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/111707 A1 (TOYOBO CO., LTD.) 10 June 2021 (2021-06-10) claims, examples | 1-16 |
| A | WO 2021/111706 A1 (TOYOBO CO., LTD.) 10 June 2021 (2021-06-10) claims, paragraph [0070], examples | 1-16 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/036226**

| Patent document cited in search report | Publication date (day/month/year) | Patent family member(s) | Publication date (day/month/year) |
|---|---|---|---|
| WO 2021/111707 A1 | 10 June 2021 | (Family: none) | |
| WO 2021/111706 A1 | 10 June 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012052283 A
- JP S49013431 A